# FASCICULE DE BREVET EUROPEEN

(11) **EP 3 264 910 B1**
(45) Date de publication et mention de la délivrance du brevet: **13.02.2019**
(21) Numéro de dépôt: 16711146.7
(22) Date de dépôt: 28.02.2016
(51) Int. Cl.: A23L 2/385, A23L 21/10, A23L 21/12

(54) **PROCÉDÉ DE FABRICATION D'UNE PRÉPARATION ALIMENTAIRE À BASE DE FRUITS ET/OU DE LÉGUMES**
VERFAHREN ZUR HERSTELLUNG EINER LEBENSMITTELZUBEREITUNG AUF BASIS VON OBST UND/ODER GEMÜSE
METHOD FOR PRODUCING A FOOD PREPARATION BASED ON FRUIT AND/OR VEGETABLES

(30) Priorité: 02.03.2015 FR 1551737
(43) Date de publication de la demande: 10.01.2018
(73) Titulaire: Mallaby Rossler, Julia, Kidlington OX5 2BA (GB); Crowley, Nicolas, Montreal, QC H3H 1C8 (CA)
(72) Inventeur: CROWLEY, Nicolas, QC H2X 3C9 Montreal (CA); MALLABY ROSSLER, Julia, OXFORD OX2 7LG (GB)
(74) Mandataire: Argyma
(86) Numéro de dépôt international: PCT/EP2016/054183
(87) Numéro de publication internationale: WO 2016/139159

(56) Documents cités:
- WO-A1-2013/106754
- WO-A2-2013/140382
- US-A- 2 970 058

## Description

### DOMAINE TECHNIQUE ET OBJET DE L'INVENTION

La présente invention se rapporte au domaine de l'alimentation et concerne plus particulièrement un procédé de fabrication d'une pâte alimentaire à base de fruits et/ou de légumes.

La préparation selon l'invention peut notamment être directement ingérée ou bien servir de base à la préparation d'un jus ou bien encore être ajoutée à un aliment tel que, par exemple, un yaourt.

### ETAT DE LA TECHNIQUE

Il est connu de stocker des jus de fruits ou de légumes dans des bouteilles en plastique ou en verre ou dans des briques en carton de type Tetrapack®. De tels conteneurs peuvent être lourds et volumineux à stocker et à transporter, à la fois pour les distributeurs et pour les utilisateurs, notamment pour une personne seule telle qu'un enfant. De ce fait, d'un point de vue écologique, l'empreinte carbone du transport de ces boissons est relativement importante. De plus, le stockage de ces jus dans de tels emballages peut être significativement limité dans le temps, notamment pour les jus frais, ce qui présente un inconvénient important.

Afin de résoudre au moins en partie ces inconvénients, il est connu de fabriquer des jus de fruits ou de légumes à partir d'un sirop ou d'une poudre alimentaire.

Les sirops, avec ou sans sucre, sont des concentrés qui comportent ordinairement des édulcorants et des arômes naturels ou artificiels dont le goût s'éloigne de celui des fruits et légumes, ce qui présente des inconvénients.

Les poudres peuvent être stockées dans des boites ou dans des sachets. Dans les deux cas cependant, elles peuvent être difficiles à manipuler car, d'une part, elles peuvent se répandre aisément dans leur environnement immédiat (air, table...), et, d'autre part, elles peuvent être difficilement solubles, notamment sur la langue ou dans des aliments de type yaourt, ce qui présente également des inconvénients.

En outre, quand ces poudres sont conditionnées en sachet, l'humidité ambiante régnant dans la salle de conditionnement peut générer des agglomérats de poudre qui génèrent des micro-perforations sur les bords du sachet du fait que la poudre accroche et empêche le scellement étanche, ce qui peut entraîner une détérioration de la poudre et présente donc un inconvénient.

Une solution pour éviter les micro-perforations consiste à ajouter à la poudre des antiagglomérants tels que, par exemple, de la maltrodextrine, de la silice ou des agents chimiques artificiels. Cependant, un tel ajout dénature le produit, dont le goût n'est alors plus complètement fidèle à celui des fruits ou des légumes frais, ce qui présente un inconvénient important.

Enfin, un autre inconvénient des poudres alimentaires réside dans le fait que, ces poudres étant très fragiles quand elles sont pures, il est très difficile de mélanger divers parfums car cela entraine une reprise en masse, c'est-à-dire que la poudre absorbe de l'humidité et/ou chauffe quand on procède au mélange qui devient alors dur et/ou collant.

Le document WO 2013/140382 A2 décrit un mélange de jus de fruit en poudre et le procédé de production dudit mélange de jus de fruit en poudre. Le procédé décrit dans ce document s'avère toutefois relativement complexe, long et onéreux.

L'invention vise donc à résoudre au moins en partie ces inconvénients en proposant une solution simple, fiable et efficace pour fabriquer une préparation alimentaire naturelle, notamment sans ajouter d'antiagglomérants.

### PRESENTATION GENERALE DE L'INVENTION

A cet effet, l'invention a pour objet un procédé de fabrication d'une préparation alimentaire visqueuse à partir d'une poudre naturelle de fruits et/ou de légumes, ledit procédé comprenant:
- une étape d'ajout d'une quantité d'eau à ladite poudre naturelle de fruits et/ou de légumes afin d'obtenir une préparation alimentaire visqueuse naturelle de fruits et/ou de légumes,
- une étape de pasteurisation de la préparation alimentaire visqueuse naturelle de fruits et/ou de légumes ainsi obtenue, et
- une étape de conditionnement de la préparation alimentaire visqueuse pasteurisée dans un conteneur alimentaire étanche.

Par les termes « poudre naturelle de fruits et/ou de légumes», on entend aussi bien une poudre unique naturelle de fruits et/ou de légumes qu'un mélange de poudres naturelles de fruits et/ou de légumes. Par le terme « naturelle », on entend que la poudre est obtenue à partir de fruits et/ou légumes sans ajout d'antiagglomérant, ni d'agent chimique artificiel. Une telle poudre naturelle de fruits et/ou de légumes peut être une poudre issue de l'agriculture biologique.

Par les termes « préparation alimentaire visqueuse de fruits et/ou de légumes», on entend un mélange visqueux et homogène d'eau et de poudre de fruits et/ou de légumes caractérisé par sa viscosité. Ce mélange constitue une masse de consistance molle résultant du mélange d'une ou plusieurs poudres inertes avec un liquide comprenant de l'eau, de préférence uniquement de l'eau ou de l'eau infusée d'herbes ou d'épices.

Par les termes « conteneur alimentaire étanche », on entend que le conteneur alimentaire protège la préparation alimentaire visqueuse pasteurisée de l'air et de la lumière.

Le procédé selon l'invention permet avantageusement d'obtenir une préparation alimentaire visqueuse à partir d'une poudre sans ajout de conservateur, ni stérilisation, une poudre pouvant en outre être avantageusement stockée préalablement. La pasteurisation permet ensuite de conditionner la préparation alimentaire visqueuse dans un sachet alimentaire étanche. De plus, la préparation alimentaire visqueuse ne nécessite ni congélation, ni surgélation, ni réfrigération et peut être conservée à température ambiante, par exemple entre 0° et 30 °. L'ajout d'eau à la poudre est contre-intuitif puisqu'il est connu d'éviter d'humidifier une poudre alimentaire lors de son conditionnement. Le conteneur alimentaire dans lequel la préparation alimentaire visqueuse est conditionnée peut par exemple être un sachet alimentaire, une bouteille qui ne laisse pas entrer l'air à l'utilisation connu sous le nom de flacon « Airless », une caisse-outre (connue de manière commerciale sous le nom de Bag-in-Box® ou BIB®).

La préparation alimentaire obtenue avec le procédé selon l'invention est notamment caractérisée par sa viscosité dynamique de manière à pouvoir aisément la conditionner, notamment en sachet.

Selon une caractéristique de l'invention, la viscosité dynamique de la préparation alimentaire à 20°C à pression atmosphérique est comprise entre 10⁻² et 35.10³ mPa.s (milli Pascal seconde ou centipoise), de préférence comprise entre 10³ et 35.10³ mPa.s.

Par les termes « à pression atmosphérique », on entend dans le présent document la pression de l'air libre, dont la valeur est comprise entre 900 et 1100 hPa, préférentiellement de l'ordre de 1000 hPa, de manière connue de l'homme du métier.

Lorsque la viscosité dynamique de la préparation alimentaire est élevée, par exemple comprise entre 10³ et 35.10³ mPa.s, la préparation alimentaire se présente sous la forme d'une pâte.

En revanche, lorsque la viscosité dynamique de la préparation alimentaire est faible, par exemple comprise entre 10⁻² et 5 mPa.s, la préparation alimentaire se présente sous la forme d'un liquide visqueux.

De préférence encore, la masse volumique à 20°C de la préparation alimentaire est comprise entre 1 et 1,2 kg/dm³.

Dans un mode de réalisation du procédé selon l'invention, le procédé comprend une étape préliminaire de déshydratation de fruits et/ou légumes frais de manière à obtenir une poudre naturelle de fruits et/ou légumes.

Avantageusement, l'étape préliminaire de déshydratation de fruits et/ou légumes frais comprend un séchage desdits fruits et/ou légumes afin de préserver leurs qualités nutritionnelles notamment leurs vitamines et leurs nutriments.

Selon un aspect de l'invention, ce séchage, dit « séchage à froid », est réalisé à une température inférieure à 50 °C afin de très peu dégrader la préparation alimentaire visqueuse, notamment lorsque celle-ci est réalisée à partir de poudre de pomme et/ou de tomate. Un tel séchage est connu sous le nom de « Cold spray drying » en langue anglaise. En variante, ce séchage à froid peut être de type séchage sous vide (« vacuum drying » en langue anglaise), réalisé entre 40 et 60 °C.

Selon un aspect de l'invention, le procédé comprend, postérieurement à l'étape de déshydratation, une étape de stockage de la poudre naturelle de fruits et/ou légumes.

Selon un autre aspect de l'invention, le procédé peut comprendre au moins une étape d'ajout à la poudre ou à la préparation alimentaire visqueuse d'au moins une épice, une herbe ou une fleur.

Le conditionnement de la préparation alimentaire visqueuse pasteurisée est réalisé sous vide ou en conditions contrôlées, c'est-à-dire que la préparation alimentaire visqueuse pasteurisée est protégée pour ne pas être contaminée. Un tel conditionnement sous vide ou en conditions contrôlée permet d'améliorer la qualité de la conservation de la préparation alimentaire visqueuse pasteurisée, qui peut ainsi atteindre plusieurs mois à une température par exemple comprise entre 0 et 30° C.

De préférence, le procédé comprend en outre, postérieurement à l'étape de conditionnement, une étape de préparation d'un jus de fruits et/ou de légumes à partir de la préparation alimentaire visqueuse pasteurisée.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

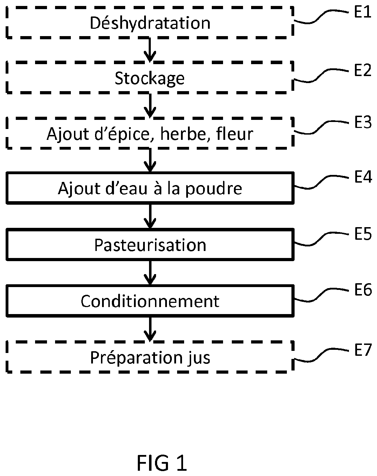

La figure 1 illustre un mode de mise en oeuvre du procédé selon l'invention.

### DESCRIPTION DETAILLEE DE L'INVENTION

Le procédé selon l'invention permet de fabriquer une préparation alimentaire visqueuse qui peut notamment être diluée dans de l'eau ou tout autre liquide adapté pour en faire un jus, être directement ingérée ou bien permettre d'aciduler une préparation telle que, par exemple, un yaourt.

Un mode de réalisation préféré du procédé selon l'invention est décrit ci-dessous en référence à la figure 1.

Dans une étape E1, des fruits et/ou des légumes frais sont déshydratés afin d'obtenir une poudre de fruits et/ou de légumes qui est stable dans le temps, c'est-à-dire qui se dégrade peu avec le temps et qui peut ainsi être conservée, par exemple pendant plusieurs mois.

Dans le mode de réalisation illustré, cette déshydratation comprend notamment un séchage à froid de la poudre, connue de l'homme du métier, permettant de préserver les vitamines et nutriments des fruits et/ou légumes et d'améliorer la dilution de la poudre dans un liquide. Ce séchage peut par exemple être réalisé par atomisation à froid (« cold spray drying » en langue anglaise) ou par séchage sous vide de manière connue de l'homme du métier. Un tel séchage à froid permet d'obtenir une poudre stable et qui se dilue bien.

Cette poudre peut avantageusement être stockée, dans une étape E2, par exemple dans des conteneurs alimentaires hermétiques, afin d'être transportée et/ou utilisée ultérieurement. Un tel stockage permet notamment de créer des préparations alimentaires en utilisant des fruits et/ou des légumes quelle que soit la saison.

Aucun agglomérant, ni agent chimique artificiel n'est ajouté de sorte que la poudre obtenue soit naturelle. Cette poudre naturelle peut avantageusement comprendre des épices, des herbes ou des fleurs ajoutées dans une étape E3, tels que, par exemple, du gingembre, de la cannelle, du sel de céleri, de l'hibiscus, de la fleur de sureau ou du romarin.

Dans une étape E4, on ajoute une quantité d'eau à une quantité prédéterminée de poudre naturelle de fruits et/ou de légumes afin d'obtenir une préparation alimentaire visqueuse naturelle de fruits et/ou de légumes.

A titre d'exemple, cette préparation alimentaire visqueuse peut comprendre un mélange constitué entre 40 et 70 %, en poids, de poudre de fruits et le complément d'eau ou bien un mélange constitué entre 30 et 70 %, en poids, de poudre de légumes et le complément d'eau.

La préparation alimentaire visqueuse de fruits et/ou de légumes ainsi obtenue se présente sous la forme d'un mélange visqueux et homogène de poudre et d'eau caractérisé par une viscosité dynamique à 20°C à pression atmosphérique comprise entre 10⁻² et 35.10³ mPa.s. La préparation alimentaire visqueuse peut se présenter aussi bien sous la forme d'une pâte visqueuse que d'un liquide visqueux.

Dans une étape E5, on pasteurise la préparation alimentaire visqueuse ainsi obtenue à l'aide d'un dispositif de pasteurisation connue de l'homme du métier en la chauffant à une température minimale pour pouvoir ensuite la conserver en gardant un maximum de nutriments, vitamines. Cette température minimale dépend notamment du type de fruits et légumes et de leur niveau d'acidité et varie entre 65°C et 95°C.

Lorsque la température est atteinte, la machine commence le refroidissement de la préparation alimentaire visqueuse, pour éviter qu'elle ne continue à cuire.

On notera que l'ajout d'épices peut être réalisé aussi bien à la poudre (étape E3), qu'à la préparation alimentaire visqueuse avant pasteurisation (étape E5).

Dans une étape E6, on conditionne la préparation alimentaire visqueuse pasteurisée dans un conteneur étanche, par exemple de type sachet, bouteille ou caisse-outre (BIB®) à l'aide d'un dispositif de conditionnement connu de l'homme du métier.

Le conditionnement de la préparation alimentaire visqueuse pasteurisée est réalisé sous vide ou en conditions contrôlées, c'est-à-dire que la préparation alimentaire visqueuse pasteurisée est protégée pour ne pas être contaminée. Un tel conditionnement sous vide ou en conditions contrôlée permet d'améliorer la qualité de la conservation de la préparation alimentaire visqueuse pasteurisée, qui peut ainsi atteindre plusieurs mois à une température par exemple comprise entre 0 et 30° C.

De préférence mais sans que cela ne soit limitatif de la portée de la présente invention, la préparation alimentaire visqueuse passe directement du dispositif de pasteurisation au dispositif de conditionnement via un tube d'alimentation.

Dans un exemple d'utilisation préféré, on prépare, dans une étape E7, un jus de fruits et/ou de légumes en diluant la préparation alimentaire visqueuse pasteurisée, conditionnée dans le conteneur alimentaire, dans de l'eau ou tout autre liquide adapté. Cette utilisation n'est nullement limitative de la portée de la présente invention et toute autre utilisation adaptée est possible tel que, par exemple, ingérer directement la préparation alimentaire visqueuse pasteurisée ou bien l'utiliser pour aciduler un aliment tel que, par exemple, un yaourt, un dessert etc.

### Exemples de résultats

A titre d'exemple, un mélange de 20 g de pâte pasteurisée composé de 23% de pulpe de pomme déshydratée, de 17% de jus de cassis déshydraté et du complément en eau présente les valeurs nutritionnelles suivantes :

**Table 1**

| | |
|---|---|
| Energie | 192 kJ / 46 kcal |
| Matières grasses | 0,2 g |
| dont acides gras saturés | 0,0 g |
| Glucides | 8,3 g |
| dont sucre | 7,2 g |
| Fibres alimentaires | 3 g |
| Protéines | 0,4 g |
| Sel | 0,00 g |
| Vitamine C | 58 mg |

De même, toujours à titre d'exemple, un mélange de 20 g de pâte pasteurisée composé de 22,2 % de pulpe de tomate déshydratée, de 11,1 % de jus de betterave déshydraté et du complément en eau présente les valeurs nutritionnelles suivantes :

**Table 2**

| | |
|---|---|
| Energie | 111 kJ / 27 kcal |
| Matières grasses | 0,3 g |
| dont acides gras saturés | 0,1 g |
| Glucides | 4,1 g |
| dont sucre | 3,3 g |
| Protéines | 1,2 g |
| Sel | 0,06 g |
| Vitamine A | 133 µg |
| Acide folique | 35,9 µg |
| Vitamine C | 15 mg |

Le procédé selon l'invention permet donc avantageusement d'obtenir une préparation alimentaire naturelle, ayant notamment conservé une proportion importante des fibres, nutriments et vitamines des fruits et/ou légumes d'origine, sans ajout d'additif de type conservateur ou agent chimique artificiel. Le goût ainsi obtenu est naturel et rappelle ainsi le goût du mélange de fruits et/ou légumes frais identiques.

De manière avantageuse, la poudre servant de base à la fabrication de la préparation alimentaire peut être aisément stockée pendant une période de temps de manière notamment à pouvoir travailler en flux tendu et réaliser les mélanges de poudre et d'eau au dernier moment avant le conditionnement.

Les étapes de déshydratation puis de réhydratation partielle de la préparation alimentaire permettent donc d'éviter avantageusement les problèmes d'agrégats lors du conditionnement. De plus, lorsqu'elle est conditionnée dans un conteneur alimentaire de manière à ne pas rentrer en contact avec l'air, même après ouverture (par exemple avec un conteneur de type pompe à diaphragme appelée « airless pump » ou de type BIB®), il n'est pas nécessaire de conserver la préparation alimentaire visqueuse à une température basse de conservation, par exemple inférieure à 6° C dans un réfrigérateur, qui peut être avantageusement conservée à une température ambiante comprise 10 et 40 ° C.

Enfin, un conditionnement en sachet de la préparation alimentaire visqueuse permet notamment une commercialisation aisée en magasin de vente à emporter, une distribution aisée, par exemple dans la rue ou sur un plateau repas, et un transport aisé aussi bien par un adulte que par un enfant, par exemple dans une poche de vêtement ou dans un sac.

Il est à noter enfin que la présente invention n'est pas limitée aux exemples décrits ci-dessus et est susceptible de nombreuses variantes accessibles à l'homme de l'art.

## Revendications

1. Procédé de fabrication d'une préparation alimentaire visqueuse à partir d'une poudre naturelle de fruits et/ou de légumes, ledit procédé comprenant:
- une étape (E4) d'ajout d'une quantité d'eau à ladite poudre naturelle de fruits et/ou de légumes afin d'obtenir une préparation alimentaire visqueuse naturelle de fruits et/ou de légumes,
- une étape (E5) de pasteurisation de la préparation alimentaire visqueuse naturelle de fruits et/ou de légumes ainsi obtenue, et
- une étape (E6) de conditionnement de la préparation alimentaire visqueuse pasteurisée dans un conteneur alimentaire étanche.

2. Procédé selon la revendication 1, **caractérisé en ce que** la viscosité dynamique de la préparation alimentaire à 20°C à pression atmosphérique est comprise entre 10⁻² et 35.10³ mPa.s.

3. Procédé selon la revendication 2, **caractérisé en ce que** la viscosité dynamique de la préparation alimentaire à 20°C à pression atmosphérique est comprise entre 10³ et 35.10³ mPa.s.

4. Procédé selon l'une des revendications 1 à 3, **caractérisé en ce que** la masse volumique à 20°C de la préparation alimentaire est comprise entre 1 et 1,2 kg/dm³.

5. Procédé selon l'une des revendications 1 à 4, **caractérisé en ce qu'**il comprend une étape préliminaire (E1) de déshydratation de fruits et/ou légumes frais de manière à obtenir une poudre naturelle de fruits et/ou légumes.

6. Procédé selon la revendication 5, **caractérisé en ce que** l'étape préliminaire (E1) de déshydratation de fruits et/ou légumes frais comprend un séchage desdits fruits et/ou légumes afin de préserver leurs qualités nutritionnelles notamment leurs vitamines et leurs nutriments.

7. Procédé selon la revendication 6, **caractérisé en ce que** le séchage est réalisé à une température inférieure à 50° C ou comprise entre 40 et 60° C.

8. Procédé selon l'une des revendications 1 à 7, **caractérisé en ce qu'**il comprend, postérieurement à l'étape de déshydratation, une étape (E2) de stockage de la poudre naturelle de fruits et/ou légumes.

9. Procédé selon l'une des revendications 1 à 8, **caractérisé en ce qu'**il comprend au moins une étape (E3) d'ajout à la poudre ou à la préparation alimentaire visqueuse d'au moins une épice, une herbe ou une fleur.

10. Procédé selon l'une des revendications 1 à 9, **caractérisé en ce qu'**il comprend en outre, postérieurement à l'étape de conditionnement (E6), une étape de préparation (E7) d'un jus de fruits et/ou de légumes à partir de la préparation alimentaire visqueuse pasteurisée.

## Patentansprüche

1. Verfahren zur Herstellung einer viskosen Lebensmittelzubereitung aus einem natürlichen Frucht- und/oder Gemüsepulver, wobei das Verfahren umfasst:
- einen Schritt (E4) des Hinzufügens einer Menge Wasser zu dem natürlichen Frucht- und/oder Gemüsepulver, um eine natürliche viskose Frucht- und/oder Gemüse-Lebensmittelzubereitung zu erhalten,
- einen Schritt (E5) des Pasteurisierens der derart erhaltenen natürlichen viskosen Frucht- und/oder Gemüse-Lebensmittelzubereitung, und
- einen Schritt (E6) des Verpackens der pasteurisierten viskosen Lebensmittelzubereitung in einem dichten Lebensmittelbehältnis.

2. Verfahren nach Anspruch 1, **dadurch gekennzeichnet, dass** die dynamische Viskosität der Lebensmittelzubereitung bei 20 °C unter atmosphärischem Druck zwischen 10⁻² und 35.10³ mPa.s liegt.

3. Verfahren nach Anspruch 2, **dadurch gekennzeichnet, dass** die dynamische Viskosität der Lebensmittelzubereitung bei 20 °C unter atmosphärischem Druck zwischen 10³ und 35.10³ mPa.s liegt.

4. Verfahren nach einem der Ansprüche 1 bis 3, **dadurch gekennzeichnet, dass** die Dichte der Lebensmittelzubereitung bei 20 °C zwischen 1 und 1,2 kg/dm³ liegt.

5. Verfahren nach einem der Ansprüche 1 bis 4, **dadurch gekennzeichnet, dass** es einen vorherigen Schritt (E1) der Dehydratation von frischen Früchten und/oder Gemüse derart umfasst, dass ein natürliches Frucht- und/oder Gemüsepulver erhalten wird.

6. Verfahren nach Anspruch 5, **dadurch gekennzeichnet, dass** der vorherige Schritt (E1) der Dehydratation von frischen Früchten und/oder Gemüse ein Trocknen der Früchte und/oder Gemüse umfasst, um deren Nährwerteigenschaften, insbesondere deren Vitamine und Nutrimente, zu schützen.

7. Verfahren nach Anspruch 6, **dadurch gekennzeichnet, dass** das Trocknen bei einer Temperatur unter 50 °C oder zwischen 40 und 60 °C durchgeführt wird.

8. Verfahren nach einem der Ansprüche 1 bis 7, **dadurch gekennzeichnet, dass** es nach dem Dehydratationsschritt einen Schritt (E2) des Lagerns des natürlichen Frucht- und/oder Gemüsepulvers umfasst.

9. Verfahren nach einem der Ansprüche 1 bis 8, **dadurch gekennzeichnet, dass** es mindestens einen Schritt (E3) des Hinzufügens zu dem Pulver oder zu der viskosen Lebensmittelzubereitung von mindestens einem Gewürz, einem Kraut oder einer Blüte umfasst.

10. Verfahren nach einem der Ansprüche 1 bis 9, **dadurch gekennzeichnet, dass** es ferner nach dem Verpackungsschritt (E6) einen Schritt der Zubereitung (E7) eines Frucht- und/oder Gemüsesafts aus der pasteurisierten viskosen Lebensmittelzubereitung umfasst.

## Claims

1. Method for producing a viscous food preparation from a natural fruit and/or vegetable powder, said method comprising:
- a step (E4) of adding a quantity of water to said natural fruit and/or vegetable powder in order to obtain a natural fruit and/or vegetable viscous food preparation,
- a step (E5) of pasteurising the natural fruit and/or vegetable viscous food preparation thus obtained, and
- a step (E6) of packaging the pasteurised viscous food preparation in a sealed food container.

2. Method according to claim 1, **characterised in that** the dynamic viscosity of the food preparation at 20 °C with an atmospheric pressure being between 10⁻² and 35.10³ mPa.s.

3. Method according to claim 2, **characterised in that** the dynamic viscosity of the food preparation at 20 °C with an atmospheric pressure being between 10³ and 35.10³ mPa.s.

4. Method according to one of claims 1 to 3, **characterised in that** the density at 20 °C of the food preparation is between 1 and 1.2 kg/dm³.

5. Method according to one of claims 1 to 4, **characterised in that** it comprises a preliminary step (E1) of dehydrating fresh fruits and/or vegetables so as to obtain a natural fruit and/or vegetable powder.

6. Method according to claim 5, **characterised in that** the preliminary step (E1) of dehydrating fresh fruits and/or vegetables comprises a drying of said fruits and/or vegetables in order to preserve the nutritional qualities thereof, in particular the vitamins thereof and the nutrients thereof.

7. Method according to claim 6, **characterised in that** the drying is done at a temperature less than 50 °C or between 40 and 60 °C.

8. Method according to one of claims 1 to 7, **characterised in that** it comprises, after the dehydration step, a step (E2) of storing the natural fruit and/or vegetable powder.

9. Method according to one of claims 1 to 8, **characterised in that** it comprises at least one step (E3) of adding to the powder or to the viscous food preparation of at least one spice, one herb or one flower.

10. Method according to one of claims 1 to 9, **characterised in that** it further comprises, after the packaging step (E6), a step of preparing (E7) a fruit and/or vegetable juice from the pasteurised viscous food preparation.
